# EUROPEAN PATENT APPLICATION

(11) **EP 3 855 377 A1**
(43) Date of publication of application: **28.07.2021**
(21) Application number: 20153148.0
(22) Date of filing: 22.01.2020
(51) Int. Cl.: G06Q 10/10, G06Q 50/00

(54) **A SYSTEM AND METHOD FOR EXCHANGING CONTACT INFORMATION**

(71) Applicant: Cardify BV, 9000 Gent (BE)
(72) Inventor: Van de velde, Bram, 9000 Gent (BE); Maurau, Bert, 9070 Destelbergen (BE); Vereecken, Seppe, 9140 Temse (BE)
(74) Representative: IP HILLS NV

(57) **Abstract**

A system (3) for exchanging with a second electronic device (2) contact information (10) from a business card (4) associated with a first electronic device (1), comprising:
- a request receiver (101) receiving a request (11) for contact information (10) from said second electronic device (2);
- a contact information managing unit (102):
o retrieving contact information (10) from a corresponding profile (12); and
o generating a share back link (20) to collect share back contact information (21) from said second electronic device (2);

- a rendering engine (103) rendering said contact information (10) and said share back link (20);
- a share back receiver (104) receiving share back contact information (21) from said second electronic device (2) when said share back link (20) is executed; and
- a profile creating engine (105) creating a new profile (22) comprising said share back contact information (21).

## Description

### Field of the Invention

The present invention generally relates to a hybrid business card system and method for effectively exchanging digital content comprising contact information between the owner and the recipient of a business card.

### Background of the Invention

Business cards are cards bearing business contact information about a company or individual. They are shared during formal introductions as a convenience and a memory aid. A business card typically comprises the owner's name, company or business affiliation, usually with a corresponding logo, and contact information such as for example street addresses, telephone number(s), fax number, e-mail addresses, website, social media addresses such as Linkedln, Facebook, Twitter accounts, etc.. Exchanging contact information between the owner of the business card and the recipient involves a manual process where both sides exchange a pre-printed business card.

When relying on pre-printed business cards, both the owner and the recipient of the business card end up scanning, writing or feeding the contact information printed on the card into their respective contact books. This process is time consuming and very inefficient for both parties. Additionally, it is inaccurate as it is prone to error when the business contact information is manually imported into the contact books, for example when the business contact information is misread, mistyped or simply when the business card is lost. Additionally, keeping track of which business contact information, with whom and when this information was shared remains an organizational challenge. It might however be of interest to keep and analyse such data for networking, sales, or personal purposes. Another limitation of pre-printed cards is that they cannot be modified or updated, for example to add or remove contact details. This means that brand new cards displaying the updated business contact information will have to be printed each time the business contact information must be updated. This results in increased costs and preparation time for the owner of the business cards. This can also create frustration at the side of the recipient of the business contact information who must again manually update his contact books. If the recipient does not update them, the risk is high he/she will be unable to contact the owner again. Finally, such pre-printed cards are easily misplaced or lost, thereby losing their sole purpose.

With handheld computers, tablets, smartphones, smartwatches and other electronic devices becoming more ubiquitous, contact information comprised in business cards is increasingly exchanged electronically via wireless connections, e.g. via infra-red, Bluetooth, RFID, SMS, specialized software application e.g. Bump, or via a cloud service e.g. licobo. With such technologies, business contact information needs to be maintained electronically and enhanced business cards can play a role. Hybrid business cards may be provided for this purpose. A hybrid business card may be a physical business card comprising a link to the business contact information of the owner, such as for example one of the owner's social media pages, mobile application page, web application page, etc.. The hybrid business card may have printed thereon an encoded object such as for example a tag, a 2D code, a QR code or an URL providing a link to the business contact information, and/or it may comprise an encoded object such as for example a chip configured to communicate via near field communication or NFC, and/or via RFID providing a link to the business contact information. These hybrid business cards provide digital business contact information directly and/or they provide a link to a source of business contact information. For example, a business card with a printed QR code requires the recipient to actively engage in the processing of the business contact information, as the recipient must take a picture of the QR code or scan the QR code with the camera of his electronic device to access the business contact information of the owner of the hybrid business card. In another example, a recipient must bring his electronic device into a short distance of the hybrid business card, for example a few centimetres, to enable the transfer of the business contact information between the two devices. The business contact information linked to such hybrid business cards can easily be updated without requiring the production of a brand-new card.

However, when scanning a code printed onto the hybrid business card or when wirelessly communicating with the hybrid business card, the recipient will most of the time be prompted to download a mobile application on his electronic device to be able to access the business contact information comprised in for example a virtual or ghost profile of the owner. The business contact information will then only be displayed once the recipient downloads, launches and logs in the mobile application. This forms a non-negligible burden at the side of the recipient. This burden may be perceived as invasive and may jeopardize the exchange of information from the owner to the recipient as the latter may be reluctant to download the mobile application and to create a specific account for this mobile application. Additionally, it is impossible for the recipient to share his/her own business contact information back with the owner of the hybrid business card without the mobile application. For example, the recipient must first create a virtual or ghost profile through the mobile application such that his/her business contact information can then be shared with the owner of the hybrid business card through the mobile application. If the recipient does not use the mobile application, it therefore becomes difficult for the owner of the hybrid card to keep track with whom he/she shared his/her business contact information. Additionally, the owner must actively engage to access the business contact information of the recipient, for example by receiving a pre-printed card from the recipient and manually importing his/her business contact information in his/her books, or by looking the recipient up in the mobile application in search for his/her virtual profile. This is time consuming and severely inefficient for both the owner and the recipient. Another limitation of such hybrid cards is that the business contact information can be accessed as soon as the code is processed or the wireless connection is established, even without the consent of the owner of the business card. This constitutes a possible confidentiality and privacy breach which may demotivate users from purchasing or using such hybrid cards.

### Summary of the Invention

It is an objective of the present invention to disclose a system and the related method that overcomes the above identified shortcomings of existing solutions. More particularly, it is an objective to disclose a system and a method to allow a fast, simple, safe, secure, robust and efficient exchange of contact information between two parties, thereby significantly improving the experience of both parties.

According to a first aspect of the present invention, the above defined objectives are realized by a system for exchanging with a second electronic device contact information from a business card associated with a first electronic device, wherein said system comprises:
- a request receiver configured to receive a request for contact information when a second electronic device establishes a wireless connection with the business card;
- a contact information managing unit configured to, when the request for contact information corresponds to a profile:
   ∘ retrieve contact information from the profile; and
   ∘ generate a share back link configured to collect share back contact information from the second electronic device;
- a rendering engine configured to render, within a browser of the second electronic device, the contact information and the share back link;
- a share back receiver configured to receive share back contact information from the second electronic device when the share back link is executed; and
- a profile creating engine configured to create a new profile comprising the share back contact information.

The system according to the present invention provides the owner of the business card with the fastest and the most efficient experience when exchanging his contact information such as for example his business contact information. The system according to the present invention does not require the user of the second electronic device to actively engage, for example by manually importing the contact information of the owner of the business card, to process the contact information of the owner of the business card. The contact information is indeed displayed in the browser of the second electronic device. When a second electronic device establishes a wireless connection with the business card, either by scanning an encoded object comprised in the business card or by bringing the second electronic device in the vicinity of the business card, a request for contact information is sent to the system according to the present invention. The system according to the present invention will then look up the unique profile corresponding to the received request for contact information. If a corresponding profile is identified by the system according to the present invention, the corresponding contact information is retrieved for exchange. In other words, activating a link between the business card and a profile of the owner of the business card, wherein the link is comprised in the business card, either by scanning an encoded object comprised in the business card or by bringing the second electronic device in the vicinity of the business card, triggers the retrieval of unique contact information comprised in a virtual or ghost profile associated with the business card. The second electronic device for example can be brought into proximity with the business card, i.e. within for example 10cm or less from the business card. Alternatively, the second electronic device for example can be brought into proximity with the business card, i.e. within for example 20cm or less from the business card. This activation further triggers the execution of a unique Uniform Resource Locator or URL in an internet web browser of the second electronic device, wherein the URL uniquely corresponds to the profile comprising the contact information. In other words, to each profile of the system according to the present invention corresponds a unique link with a business card which is activated when the second electronic device for example scans an encoded object on the business card and/or establishes a wireless connection with the business card through an encoded object. The web browser enables execution of a representation of a web page comprising the contact information in the web browser of the second electronic device. A user of the second electronic device therefore does not need to manually import the contact information into the second electronic device, thereby saving time and removing the risk of introducing a mistake when copying the contact information. A user of the second electronic device will be provided with the contact information according to the most recently updated profile and contact information of the owner of the business card available at the system side.

No mobile application must be downloaded on the second electronic device to be able to receive the contact information from the owner of the business card. No account on a specific online platform must be created and/or accessed on/by the second electronic device to be able to receive the contact information from the owner of the business card. Receiving contact information from the system according to the present invention is therefore not invasive at the side of the second electronic device. The system according to the present invention thereby facilitates the exchange of contact information between the owner of the business card and the second electronic device without any mobile application.

The system according to the present invention further allows the owner of the first electronic device and of the business card to keep track of whom this contact information was shared with, and/or which contact information was shared with the second electronic device and/or when and/or where this contact information was shared with the second electronic device. Indeed, the system according to the present invention generates a share back link configured to collect share back contact information from the second electronic device when the second electronic device requests contact information exchange from the business card. The share back link is displayed within a browser of the second electronic device. The activation from the second electronic device therefore triggers the execution of a unique Uniform Resource Locator or URL in an internet web browser of the second electronic device, wherein the URL uniquely requests the second electronic device to share contact information. The web browser enables execution of a representation of a web page comprising a request for contact information in the web browser of the second electronic device. When the second electronic device provides his/her share back contact information via the web page, i.e. when share back contact information from the second electronic device is received by the system according to the present invention when the share back link is executed or accessed, a new profile comprising the share back contact information is saved in the system, for example in a contact book of the first electronic device which may be accessed via for example a mobile application or an online platform. The share back contact information for example comprises one or more of the following: a name of the user of the second electronic device, a full name of the user of the second electronic device, the name of the company for which the user of the second electronic device works, the logo of the company, an address of the user of the second electronic device and/or of the company, a telephone number of the company, a mobile telephone number of the user of the second electronic device, a fax number, an e-mail address of the company, an e-mail address of the user of the second electronic device, a job description of the user of the second electronic device, a picture, a link to one or more social media pages of the company and/or of the user of the second electronic device such as for example Linkedln, Facebook, Instagram, Twitter, the time and/or the place where the exchange of contact information took place, etc.. The share back contact information may optionally further comprise one or more of the following: a curriculum vitae of the user of the second electronic device, a document of the company and/or of the user of the second electronic device such as for example a text document, a table, an image, a video file, an audio file, etc.. Upon receipt of the share back contact information by the system according to the present invention when the share back link is executed or accessed within a web browser of the second electronic device, the system creates a new profile comprising the share back contact information such that the share back contact information may be accessed by the owner of the first electronic device and of the business card. In other words, the owner of the first electronic device and of the business card does not need to actively request and process share back contact information from the user of the second electronic device.

No mobile application must be downloaded on the second electronic device to be able to share back contact information from the second electronic device. No account on a specific online platform must be created and/or accessed on/by the second electronic device to be able to share back the contact information from a user of the second electronic device. In other words, the system according to the present invention provides the fastest, the most efficient and the least invasive way for the second electronic device to access contact information about the owner of the business card and to share back his contact information with the owner of the business card.

The business card according to the present invention is for example a hybrid business card. The business card according to the present invention for example comprises one or more chips configured to communicate via near field communication protocols or NFC, and/or via radio-frequency identification or RFID, and/or via any other suitable wireless communication technique to provide a link to the contact information uniquely comprised in a profile of the owner of the business card. Alternatively, the business card according to the present invention has printed thereon one or more encoded objects such as for example a tag, a 2D code, a QR code or an URL providing a unique link to the business contact information. The contact information is not stored on the business card itself, but the business card provides a link to a unique virtual or ghost profile of the owner made available in the system according to the present invention and wherein the virtual or ghost profile comprises the contact information of the owner. The contact information for example comprises one or more of the following: a name of the owner of the business card, a full name of the owner, the name of the company for which the owner works, the logo of the company, an address of the owner and/or of the company, a telephone number of the company, a mobile telephone number of the owner, a fax number, an e-mail address of the company, an e-mail address of the owner, a job description of the owner, a picture, a link to one or more social media pages of the company and/or of the owner such as for example Linkedln, Facebook, Instagram, Twitter, the time and/or the place where the exchange of contact information took place, etc.. The contact information may optionally further comprise one or more of the following: a curriculum vitae of the owner, a document of the company and/or of the owner such as for example a text document, a table, an image, a video file, an audio file, etc.. This way, no contact information of the owner of the business card must be printed on the business card. This is advantageous for the design of the business card. If the business card is lost, no personal contact information about the owner of the business card is visible on the business card. The owner of the business card may disactivate the business card remotely via the system according to the present invention such that the contact information of the owner of the lost business card may not be accessed by a second electronic device anymore. In other words, when the owner of the business card remotely disactivated the business card and when the system according to the present invention receives a request from a second electronic device to access the contact information corresponding to the business card, the system according to the present invention does not retrieve contact information from the profile and does not generate a share back link configured to collect share back contact information from the second electronic device.

Additionally, the profile and/or the contact information available via a hybrid business card comprising a chip for wireless communication can be easily updated or modified. Indeed, the contact information can be updated or modified within the system according to the present invention by for example the owner of the business card and the link to this updated or modified contact information can be instantly updated. This way, the updated or modified contact information can instantly be made available to a recipient such as the second electronic device. It is therefore not necessary anymore to print or manufacture a new business card every time the contact information of the owner changes. This cuts down the costs for the owner and eliminates the frustration of the recipient who always accesses up-to-date contact information about the owner.

According to an optional aspect of the invention, the system further comprises a contact saving engine configured to, upon reception of the contact information from said profile, save the contact information from the profile into the second electronic device.

This way, the contact information of the owner of the business card comprised in the profile of the owner is automatically imported and copied into a contact book of the second electronic device, thereby guaranteeing the accuracy of the contact information. The contact information of the owner of the business card may therefore be consulted by a user of a second electronic device even when the second electronic device is not in the vicinity of the business card. The contact information is preferably saved in a format compatible with the requirements of the contact book of second electronic device. Alternatively, the contact information of the owner of the business card comprised in the profile of the owner is also automatically imported and copied into a contact book of a mobile application of the second electronic device, wherein the mobile application is managed by the system according to the present invention. This way, when the contact information of the owner of the business card is modified or updated, for example by the owner of the business card, the modified or updated contact information is communicated to the second electronic device via the mobile application, and may be imported and copied into a contact book of the second electronic device and/or into a contact book of the mobile application of the second electronic device managed by the system according to the present invention.

According to an optional aspect of the invention, the contact saving engine is further configured to save the contact information from the profile into a second format compatible with a customer relationship management system coupled to the second electronic device, thereby integrating the contact information from the profile into a customer relationship management system coupled to the second electronic device.

This way, the contact information of the owner of the business card comprised in the profile of the owner is automatically formatted to be imported and copied into a customer relationship management system or CRM system of the second electronic device, thereby guaranteeing the accuracy of the contact information. The contact information of the owner of the business card may therefore be consulted by a user of a second electronic device even when the second electronic device is not in the vicinity of the business card. Alternatively, the contact information of the owner of the business card comprised in the profile of the owner is also automatically imported and copied into a contact book of a mobile application of the second electronic device, wherein the mobile application is managed by the system according to the present invention. This way, when the contact information of the owner of the business card is modified or updated, for example by the owner of the business card, the modified or updated contact information is communicated to the second electronic device via the mobile application, and may be imported and copied into a CRM system of the second electronic device and/or into a contact book of the mobile application of the second electronic device managed by the system according to the present invention.

According to an optional aspect of the invention, the contact information managing unit is further configured to generate a push link for the new profile and wherein the rendering engine is further configured to render the push link to the first electronic device, thereby enabling the first electronic device to look up the share back contact information from the new profile.

This way, the system notifies the owner of the first electronic device and of the business card that share back contact information from a receiver of his own contact information was received by the system and is available for consultation and/or download. Upon receipt of the share back contact information by the system according to the present invention when the share back link is executed or accessed within a web browser of the second electronic device, the system creates a new profile comprising the share back contact information such that the share back contact information may be accessed by the owner of the first electronic device and of the business card. A push link uniquely corresponding to the new profile comprising the share back contact information is generated by the system and is rendered into to the first electronic device. The push link may for example be rendered through a web browser of the first electronic device. The web browser enables execution of a representation of a web page comprising a request in the web browser of the first electronic device to consult and/or save the share back contact information on the first electronic device. Alternatively, the push link may for example be rendered through a mobile application present on the first electronic device and managed by the system according to the present invention. In other words, the owner of the first electronic device and of the business card does not need to actively request and process share back contact information from the user of the second electronic device. Contact information between the first electronic device and the second electronic device is therefore exchanged in the fastest and most efficient manner.

According to an optional aspect of the invention, the contact saving engine is further configured to, upon execution of the push link, save the share back contact information from the new profile into the first electronic device.

This way, the share back contact information received by the system from the second electronic device comprised in the new profile is automatically formatted to be imported and copied into a contact book of the first electronic device, thereby guaranteeing the accuracy of the contact information. The share back contact information received by the system from the second electronic device may therefore be consulted by a user of the first electronic device even when the first electronic device is not in the vicinity of the second electronic device and even if the first electronic device did not request share back contact information from the second electronic device. The share back contact information is preferably saved in a format compatible with the requirements of the contact book of first electronic device. Alternatively, the share back contact information received by the system from the second electronic device and comprised in the new profile is also automatically imported and copied into a contact book of a mobile application of the first electronic device, wherein the mobile application is managed by the system according to the present invention. This way, when the share back contact information received from the second electronic device is modified or updated by a user of the second electronic device through the mobile application, the modified or updated share back contact information is communicated to the first electronic device via the mobile application, and may be imported and copied into a CRM system of the first electronic device and/or into a contact book of the mobile application of the first electronic device managed by the system according to the present invention.

According to an optional aspect of the invention, the contact saving engine is further configured to save the share back contact information from the new profile into a first format compatible with a customer relationship management system coupled to the first electronic device, thereby integrating the share back contact information from the new profile into a customer relationship management system coupled to the first electronic device.

This way, the share back contact information received by the system from the second electronic device comprised in the new profile is automatically formatted to be imported and copied into a customer relationship management system or CRM system of the first electronic device, thereby guaranteeing the accuracy of the contact information. The share back contact information received by the system from the second electronic device may therefore be consulted by a user of the first electronic device even when the first electronic device is not in the vicinity of the second electronic device and even if the first electronic device did not request share back contact information from the second electronic device. Alternatively, the share back contact information received from the second electronic device comprised in the new profile is also automatically imported and copied into a contact book of a mobile application of the first electronic device, wherein the mobile application is managed by the system according to the present invention. This way, when the share back contact information received from the second electronic device is modified or updated by a user of the second electronic device through the mobile application, the modified or updated share back contact information is communicated to the first electronic device via the mobile application, and may be imported and copied into a CRM system of the first electronic device and/or into a contact book of the mobile application of the first electronic device managed by the system according to the present invention.

According to an optional aspect of the invention, the share back contact information from the new profile is not saved into the first electronic device when the push link is not executed by the first electronic device or when the first electronic device discards the push link.

This way, the owner of the first electronic device and of the business card may reject the push link and thereby refuse to consult and/or save the share back contact information received by the system from the second electronic device. This helps the owner of the first electronic device sorting the new profiles from which the share back contact information and only picking out the new profiles which are relevant to the owner of the first electronic device to be saved. Instead of saving all the new profiles, the owner of the first electronic device can scan them and selectively save some of them.

According to an optional aspect of the invention, the browser of the second electronic device is a web browser and wherein the rendering engine is further configured to enable execution of a representation of a web page incorporating the contact information and/or the share back link in the web browser of the second electronic device.

This way, the system is compatible with any type of device and any operating system running on these devices. The exchange of contact information between the first electronic device and the second electronic device only requires a browser such as for example a web browser to be installed on both devices. This is the lightest implementation for exchange of contact information.

According to an optional aspect of the invention, the system further comprises a profile database configured to store contact information for profiles and further configured to store the share back contact information for the new profile.

The profile database is for example comprised in the system. Alternatively, profiles comprising contact information and new profiles comprising share back contact information are stored in a profile database which is implemented in a database independent from the system.

According to an optional aspect of the invention, the system further comprises a rule generator configured to allow the first electronic device to configure the contact information.

Another limitation of existing hybrid cards according to the prior art is that the business contact information linked to these hybrid cards can be accessed as soon as the code is processed or the wireless connection is established, even without the consent of the owner of the business card. This constitutes a possible confidentiality and privacy breach which may demotivate users from purchasing or using such hybrid cards. The system of the present invention allows the owner of the business card according to the present invention to create rules to configure the contact information. This way, the owner of the business card can select which contact information may be shared and with whom this contact information may be shared. This allows the owner of the business card to only make some contact information available to certain recipients, while other recipient may access the entirety of the contact information provided by the owner of the business card to the system according to the present invention. The owner can set up rules such as for example, only providing name, company and e-mail addresses to certain recipients and providing name, company, e-mail addresses and telephone number to other recipients. Setting up these rules and predetermining which contact information may be shared with whom may happen through a mobile application downloaded onto the first electronic device. The definition of groups of recipients and the predetermination of the corresponding contact information which may be shared with each group may happen through the mobile application. Alternatively, the owner of the business card may manage his profile and/or the rules and/or the share back link through alternative computing devices if they are logged on to his/her profile on the system and the computing devices are connected to an internet network such as for example a wireless network.

According to an optional aspect of the invention, the system further comprises a share back configurator configured to allow the first electronic device to configure the share back link.

This way, the owner of the business card may predetermine which share back contact information from a user of the second electronic device he/she wants the user of the second electronic device to share with him/her. The owner of the business card can for example request the user of the second electronic device to share his/her name, company, e-mail address and telephone number but not require the street address of the company. Share back contact information required by the owner of the business card will be displayed in corresponding fields in the share back link marked as required. Share back contact information not explicitly required or explicitly marked as not required by the owner of the business card may not be displayed in fields in the share back link or may be displayed in fields marked as optional in the share back link. The system according to the present invention further optionally comprises a search engine configured to search for further share back contact information online about the receiver of the contact information who shared his share back contact information with the first electronic device. The additional share back contact information is for example retrieved from online websites such as for example Google, Linkedln, Facebook, Twitter, one or more websites of companies, etc.. The additional share back contact information is for example searched starting for example from the name of the receiver of the contact information obtained when the share back link is executed by the receiver. Alternatively, the additional share back contact information is for example searched starting for example from the e-mail address of the receiver of the contact information obtained when the share back link is executed by the receiver.

According to an optional aspect of the invention, the business card comprises:
- a memory configured to store a link associated with a profile comprising contact information; and
- a wireless transceiver configured to establish a wireless connection with one or more electronic devices.

In other words, the business card may be a hybrid business card configured to comprise an embedded memory for a unique URL link associated with the owner's contact information. The business card may be made of two layers of paper or cardboard between which the wireless transceiver is inserted. Alternatively, the business card may be made of plastic in which the wireless transceiver is embedded.

According to a second aspect of the invention, there is provided a business card associated with a first electronic device, where the business card comprises an encoded object and/or a wireless transceiver configured to provide a link associated with a profile comprising contact information, wherein the profile is comprised in a system; and wherein the encoded object and/or said wireless transceiver are further configured to trigger the system to render, in a browser of a second electronic device and when the second electronic device establishes a wireless connection with the business card, the contact information and a share back link configured to collect share back contact information from the second electronic device.

According to a third aspect of the invention, there is provided a computer implemented method for exchanging with a second electronic device contact information from a business card associated with a first electronic device, wherein the method comprises the steps of:
- receiving a request for contact information when a second electronic device establishes a wireless connection with the business card;
- determining whether an association between the request for contact information and a profile exists;
- when an association exists, retrieving contact information from the profile;
- rendering the contact information within a browser of the second electronic device;
- generating a share back link configured to collect share back contact information from the second electronic device;
- rendering the share back link within the browser of the second electronic device;
- receiving share back contact information from the second electronic device when the share back link is executed; and
- creating a new profile comprising the share back contact information.

The method according to the present invention provides the owner of the business card with the fastest and the most efficient experience when exchanging his contact information such as for example his business contact information. The method according to the present invention does not require the user of the second electronic device to actively engage to process the contact information. The contact information is indeed displayed in the browser of the second electronic device. When a second electronic device establishes a wireless connection with the business card, either by scanning an encoded object comprised in the business card or by bringing the second electronic device in the vicinity of the business card, a request for contact information is sent. The unique profile corresponding to the received request for contact information will be looked up. If a corresponding profile is identified, the corresponding contact information is retrieved for exchange. In other words, activating a link between the business card and a profile of the owner of the business card, wherein the link is comprised in the business card, either by scanning an encoded object comprised in the business card or by bringing the second electronic device in the vicinity of the business card, triggers the retrieval of unique contact information comprised in a virtual or ghost profile associated with the business card. The second electronic device for example can be brought into proximity with the business card, i.e. within for example 10cm or less from the business card. Alternatively, the second electronic device for example can be brought into proximity with the business card, i.e. within for example 20cm or less from the business card. This activation further triggers the execution of a unique Uniform Resource Locator or URL in an internet web browser of the second electronic device, wherein the URL uniquely corresponds to the profile comprising the contact information. In other words, to each profile corresponds a unique link with a business card which is activated when the second electronic device for example scans an encoded object on the business card and/or establishes a wireless connection with the business card through an encoded object. The web browser enables execution of a representation of a web page comprising the contact information in the web browser of the second electronic device. A user of the second electronic device therefore does not need to manually import the contact information into the second electronic device, thereby saving time and removing the risk of introducing a mistake when copying the contact information. A user of the second electronic device will be provided with the contact information according to the most recently updated profile and contact information of the owner of the business card available.

No mobile application must be downloaded on the second electronic device to be able to receive the contact information from the owner of the business card. No account on a specific online platform must be created and/or accessed on/by the second electronic device to be able to receive the contact information from the owner of the business card. Receiving contact information is therefore not invasive at the side of the second electronic device. The method according to the present invention thereby facilitates the exchange of contact information between the owner of the business card and the second electronic device without any mobile application.

The method according to the present invention further allows the owner of the first electronic device and of the business card to keep track of whom this contact information was shared with, and/or which contact information was shared with the second electronic device and/or when and/or where this contact information was shared with the second electronic device. Indeed, the method according to the present invention generates a share back link configured to collect share back contact information from the second electronic device when the second electronic device requests contact information exchange from the business card. The share back link is displayed within a browser of the second electronic device. The activation from the second electronic device therefore triggers the execution of a unique Uniform Resource Locator or URL in an internet web browser of the second electronic device, wherein the URL uniquely requests the second electronic device to share contact information. The web browser enables execution of a representation of a web page comprising a request for contact information in the web browser of the second electronic device. When the second electronic device provides his/her share back contact information via the web page, i.e. when share back contact information from the second electronic device is received when the share back link is executed or accessed, a new profile comprising the share back contact information is saved in the system, for example in a contact book of the first electronic device which may be accessed via for example a mobile application or an online platform. The share back contact information for example comprises one or more of the following: a name of the user of the second electronic device, a full name of the user of the second electronic device, the name of the company for which the user of the second electronic device works, the logo of the company, an address of the user of the second electronic device and/or of the company, a telephone number of the company, a mobile telephone number of the user of the second electronic device, a fax number, an e-mail address of the company, an e-mail address of the user of the second electronic device, a job description of the user of the second electronic device, a picture, a link to one or more social media pages of the company and/or of the user of the second electronic device such as for example Linkedln, Facebook, Instagram, Twitter, the time and/or the place where the exchange of contact information took place, etc.. The share back contact information may optionally further comprise one or more of the following: a curriculum vitae of the user of the second electronic device, a document of the company and/or of the user of the second electronic device such as for example a text document, a table, an image, a video file, an audio file, etc.. Upon receipt of the share back contact information when the share back link is executed or accessed within a web browser of the second electronic device, a new profile comprising the share back contact information is created such that the share back contact information may be accessed by the owner of the first electronic device and of the business card. In other words, the owner of the first electronic device and of the business card does not need to actively request and process share back contact information from the user of the second electronic device. The method according to the present invention further comprises the step of storing the new profile.

No mobile application must be downloaded on the second electronic device to be able to share back contact information from the second electronic device. No account on a specific online platform must be created and/or accessed on/by the second electronic device to be able to share back the contact information from a user of the second electronic device. In other words, the method according to the present invention provides the fastest, the most efficient and the least invasive way for the second electronic device to access contact information about the owner of the business card and to share back his contact information with the owner of the business card.

The business card according to the present invention is for example a hybrid business card. The business card according to the present invention for example comprises one or more chips configured to communicate via near field communication protocols or NFC, and/or via radio-frequency identification or RFID, and/or via any other suitable wireless communication technique to provide a link to the contact information uniquely comprised in a profile of the owner of the business card. Alternatively, the business card according to the present invention has printed thereon one or more encoded objects such as for example a tag, a 2D code, a QR code or an URL providing a unique link to the business contact information. The contact information is not stored on the business card itself, but the business card provides a link to a unique virtual or ghost profile of the owner made available and wherein the virtual or ghost profile comprises the contact information of the owner. The contact information for example comprises one or more of the following: a name of the owner of the business card, a full name of the owner, the name of the company for which the owner works, the logo of the company, an address of the owner and/or of the company, a telephone number of the company, a mobile telephone number of the owner, a fax number, an e-mail address of the company, an e-mail address of the owner, a job description of the owner, a picture, a link to one or more social media pages of the company and/or of the owner such as for example Linkedln, Facebook, Instagram, Twitter, the time and/or the place where the exchange of contact information took place, etc.. The contact information may optionally further comprise one or more of the following: a curriculum vitae of the owner, a document of the company and/or of the owner such as for example a text document, a table, an image, a video file, an audio file, etc.. This way, no contact information of the owner of the business card must be printed on the business card. This is advantageous for the design of the business card. If the business card is lost, no personal contact information about the owner of the business card is visible on the business card. The owner of the business card may disactivate the business card remotely via a mobile application and/or an online platform such that the contact information of the owner of the lost business card may not be accessed by a second electronic device anymore. In other words, when the owner of the business card remotely disactivated the business card and when a request from a second electronic device to access the contact information corresponding to the business card is received, the method according to the present invention does not retrieve contact information from the profile and does not generate a share back link configured to collect share back contact information from the second electronic device.

Additionally, the profile and/or the contact information available via a hybrid business card comprising a chip for wireless communication can be easily updated or modified. Indeed, the contact information can be updated or modified by for example the owner of the business card and the link to this updated or modified contact information can be instantly updated. This way, the updated or modified contact information can instantly be made available to a recipient such as the second electronic device. It is therefore not necessary anymore to print or manufacture a new business card every time the contact information of the owner changes. This cuts down the costs for the owner and eliminates the frustration of the recipient who always accesses up-to-date contact information about the owner.

According to a fourth aspect of the invention, there is provided a method comprising the steps of:
- storing a link associated with a profile comprising contact information, wherein the profile is comprised in a system;
- establishing a wireless connection with one or more electronic devices and with the system for exchanging with a second electronic device contact information from the business card; and
- transmitting a request for the contact information to the system when the second electronic device establishes a wireless connection with the business card to render in a browser of the second electronic device the contact information from the profile and a share back link configured to collect share back contact information from the second electronic device.

According to a fifth aspect of the invention, there is provided the use of a business card in a system according to a first aspect of the invention comprising the steps of:
- providing through an encoded object and/or a wireless transceiver a link associated with a profile comprising contact information, wherein the profile is comprised in a system;
- via the encoded object and/or the wireless transceiver, triggering the system to render, in a browser of a second electronic device and when the second electronic device establishes a wireless connection with the business card, the contact information and a share back link configured to collect share back contact information from the second electronic device.

The current invention in addition also relates to a computer program comprising software code adapted to perform the method according to the present invention.

The invention further relates to a computer readable storage medium comprising the computer program according to the present invention.

The invention further relates to a computer readable storage medium comprising computer-executable instructions which, when executed by a computing system, perform the method according to the present invention.

### Brief Description of the Drawings

Fig. 1 schematically illustrates an embodiment of a system according to the present invention.
Fig. 2A schematically illustrates an embodiment of a validation via timeout of a system according to the present invention. Fig. 2B schematically illustrates an embodiment of validation of share back of contact information of a system according to the present invention.
Fig. 3 schematically illustrates an embodiment of the steps of a method according to the present invention.
Fig. 4 schematically illustrates a suitable computing system for hosting the system of Fig. 1.

### Detailed Description of Embodiment(s)

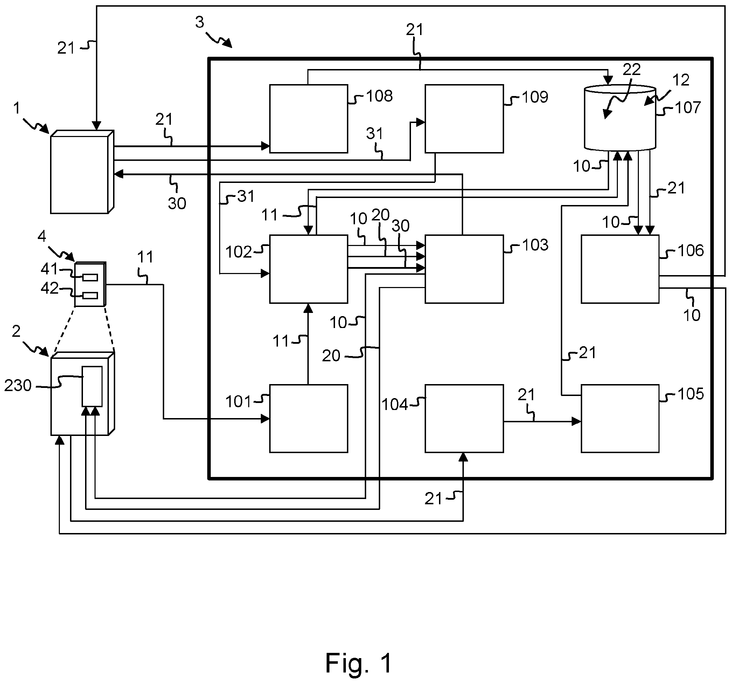

According to an embodiment shown in Fig. 1, a system 3, a first electronic device 1, a second electronic device 2 and a business card 4 associated with the first electronic device 1 in the sense that the owner of the first electronic device 1 is the owner of the business card 4 and that the business card 4 is linked to the first electronic device 1 in the system 3. The system 3 comprises a request receiver 101, a contact information managing unit 102, a rendering engine 103, a share back receiver 104 and a profile creating engine 105. The request receiver 101 receives a request 11 for contact information 10 when the second electronic device 2 establishes a wireless connection with the business card 4. The contact information managing unit 102 checks whether the request 11 for contact information 10 corresponds to a profile 12 of the system 3. When the request 11 for contact information 10 corresponds to a profile 12, the contact information managing unit 102 retrieves the contact information 10 from the profile 12. The contact information managing unit 102 further generates a share back link 20 to collect share back contact information 21 from the second electronic device 2. The rendering engine 103 renders, within a browser 230 of the second electronic device 2, the contact information 10 and the share back link 20, for example consecutively. The share back receiver 104 receives share back contact information 21 from the second electronic device 2 when the share back link 20 is executed in the browser 230 of the second electronic device 2. The profile creating engine 105 creates a new profile 22 comprising the share back information 21 in the system 3. Optionally, the system 3 further comprises a contact saving engine 106 which, upon reception of the contact information 10 from the profile 12, saves the contact information 10 from the profile 12 into the second electronic device 2. Optionally, the contact information managing unit 102 generates a push link 30 for the new profile 22. The rendering engine 103 then renders the push link 30 to the first electronic device 1, thereby enabling the first electronic device 1 to look up the share back contact information 21 from the new profile 22. The contact saving engine 106 is further configured to, upon execution of the push link 30, save the share back contact information 21 from the new profile 22 into the first electronic device 1. The contact saving engine 106 is further configured to, upon execution of the push link 30, save the share back contact information 21 from the new profile 22 into a first format compatible with a customer relationship management system coupled to the first electronic device 1, thereby integrating the share back contact information 21 from the new profile 22 into a customer relationship management system coupled to the first electronic device 1. According to an alternative embodiment, the share back contact information 21 from the new profile 22 is not saved into the first electronic device 1 when the push link 30 is not executed by the first electronic device 1 or when the first electronic device 1 discards the push link 30. The second electronic device 2 therefore comprises a browser 230. The browser 230 is for example a web browser. The rendering engine 103 enables execution of a representation of a web page incorporating the contact information 10 and/or the share back link 20 of the web browser 230 of the second electronic device 2. According to an alternative embodiment, the rendering engine 103 enables execution of a representation of a web page incorporating the contact information 10 and/or the execution of a representation of a different web page incorporating the share back link 20 of the web browser 230 of the second electronic device 2. The system 3 further comprises a profile database 107 to store the contact information 10 for the profile 12. The profile database 107 further stores the share back contact information 21 for the new profile 22. According to an alternative embodiment, the profiles 12;22 are stored in a remote database independent from the system 3 and operationally coupled to the system 3. The system 3 then retrieves the contact information 10 and the share back contact information 21 from this remote database. The system 3 further optionally comprises a rule generator 108. The rule generator 108 allows the first electronic device 1 to configure the contact information 10 which is to be shared with the second electronic device 2. Optionally, the system 3 allows the first electronic device 1 to configure the share back link 20. The business card 4 comprises an encoded object 41 and/or a wireless transceiver 42 to provide a link associated with the profile 12 comprising the contact information 10, wherein the profile 12 is comprised in the system 3. The business card 4 may comprise a wireless transceiver 42 configured to establish a wireless connection with one or more of the electronic devices 1;2 and with the system 3 for exchanging, with the second electronic device 2, the contact information 10 and further configured to transmit a request 11 for the contact information 10 to the system 3 when the second electronic device 2 establishes a wireless connection with the business card 4 to render in the browser 230 of the second electronic device 2 the contact information 10 from the profile 12 and the share back link 20 configured to collect the share back contact information 21 from the second electronic device 2.

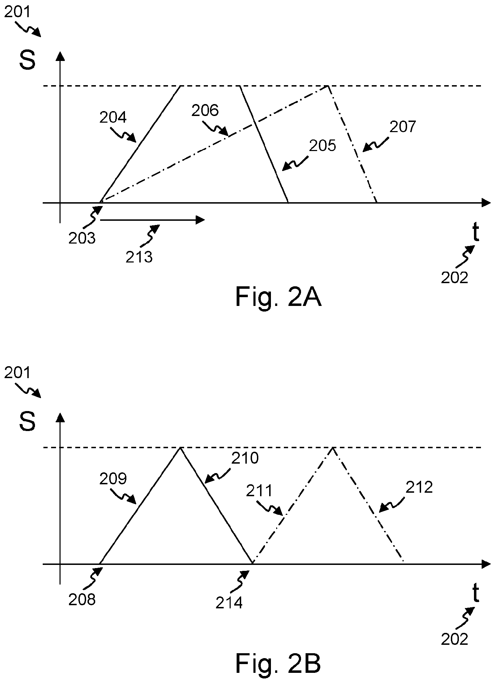

Fig. 2A schematically illustrates a validation via timeout performed by the system 3 according to Fig. 1. Components having identical reference numbers perform the same function. In Fig. 2A are depicted signals transmitted between electronic devices and the system 3 of Fig. 1. The signals S are labelled 201 and the horizontal axis is the time labelled 202. At the time labelled 203, a first electronic device sends a request 204 to access contact information when triggering a business card. At the time labelled 203, a second electronic device different from the first electronic device sends a request 206 different from the request 204 to access contact information when triggering the same business card. The request 204 arrives at the system 3 of Fig. 1 before the timeout period 213. The contact information corresponding to the request 204 is therefore sent by the system 3 to the first electronic device. However, the request 206 is unable to arrive at the system 3 before the timeout period 213 expires. The request 206 arrives too late. For example, the system 3 was not accessible for example if the second electronic device does not have an internet connection. According to an alternative embodiment, the request times out because the owner of the business card declines the request to share his/her contact information with the second electronic device. The system 3 of Fig. 1 cannot fulfil the request 206. The second electronic device does not receive the contact information corresponding to the request 206. Fig. 2B schematically illustrates a share back validation performed by the system 3 according to Fig. 1. Components having identical reference numbers perform the same function. In Fig. 2B are depicted signals transmitted between electronic devices and the system 3 of Fig. 1. The signals S are labelled 201 and the horizontal axis is the time labelled 202. At the time 208, a request 209 is sent from a first electronic device to the system 3. The request 209 is handled by the system 3 and the contact information 210 corresponding the request 208 about the owner of a second electronic device is shared with the first electronic device. The first electronic device shares back his share back contact information and sends it to the system 3 of Fig. 1 via the signal 211. The system 3 of Fig. 1 then pushes the share back contact information 212 back to the second electronic device.

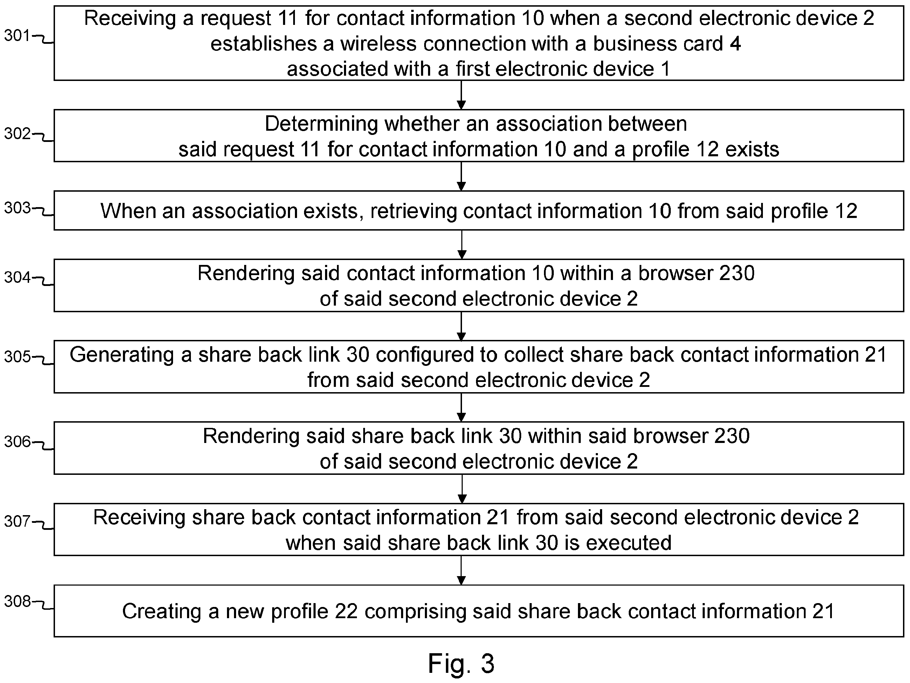

Fig. 3 schematically illustrates an embodiment of the steps of a method according to the present invention for exchanging with a second electronic device 2 contact information 10 from a business card 4 associated with a first electronic device 1. In a first step 301, a request 11 for contact information 10 is received when the second electronic device 2 establishes a wireless connection with the business card 4. An association between the request 11 for contact information 10 and a profile 12 is sought in step 302. In step 303, when such association exists, the contact information 10 from the profile 12 is retrieved. Then, in step 304, the contact information 10 is rendered within a browser 230 of the second electronic device 2. A share back link 20 is generated in step 305 to collect share back contact information 21 from the second electronic device 2. The share back link is then rendered in step 306 within the browser 230 of the second electronic device 2. In step 307, the share back contact information 21 is received from the second electronic device 2 when the share back link 20 is executed. Finally, in step 308, a new profile 22 comprising the share back contact information 21 is created.

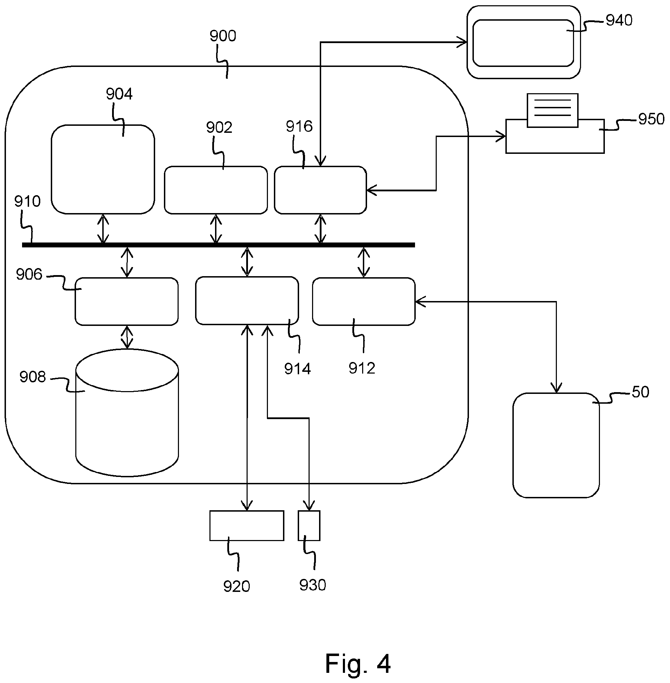

Fig. 4 shows a suitable computing system 900 for hosting the system 1 of Fig. 1. Computing system 900 may in general be formed as a suitable general purpose computer and comprise a bus 910, a processor 902, a local memory 904, one or more optional input interfaces 914, one or more optional output interfaces 916 a communication interface 912, a storage element interface 906 and one or more storage elements 908. Bus 910 may comprise one or more conductors that permit communication among the components of the computing system. Processor 902 may include any type of conventional processor or microprocessor that interprets and executes programming instructions. Local memory 904 may include a random access memory (RAM) or another type of dynamic storage device that stores information and instructions for execution by processor 902 and/or a read only memory (ROM) or another type of static storage device that stores static information and instructions for use by processor 904. Input interface 914 may comprise one or more conventional mechanisms that permit an operator to input information to the computing device 900, such as a keyboard 920, a mouse 930, a pen, voice recognition and/or biometric mechanisms, etc. Output interface 916 may comprise one or more conventional mechanisms that output information to the operator, such as a display 940, a printer 950, a speaker, etc. Communication interface 912 may comprise any transceiver-like mechanism such as for example two 1Gb Ethernet interfaces that enables computing system 900 to communicate with other devices and/or systems, for example mechanisms for communicating with one or more other computing systems 50. The communication interface 912 of computing system 900 may be connected to such another computing system by means of a local area network (LAN) or a wide area network (WAN, such as for example the internet, in which case the other computing system 980 may for example comprise a suitable web server. Storage element interface 906 may comprise a storage interface such as for example a Serial Advanced Technology Attachment (SATA) interface or a Small Computer System Interface (SCSI) for connecting bus 910 to one or more storage elements 908, such as one or more local disks, for example 1TB SATA disk drives, and control the reading and writing of data to and/or from these storage elements 908. Although the storage elements 908 above is described as a local disk, in general any other suitable computer-readable media such as a removable magnetic disk, optical storage media such as a CD or DVD, -ROM disk, solid state drives, flash memory cards, ... could be used. The system 900 described above can also run as a Virtual Machine above the physical hardware.

The system 1 of Fig. 1 can be implemented as programming instructions stored in local memory 904 of the computing system 900 for execution by its processor 902. Alternatively, system 1 of Fig. 1 could be stored on the storage element 908 or be accessible from another computing system 50 through the communication interface 912.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system (3) for exchanging with a second electronic device (2) contact information (10) from a business card (4) associated with a first electronic device (1), wherein said system (3) comprises:
- a request receiver (101) configured to receive a request (11) for contact information (10) when a second electronic device (2) establishes a wireless connection with said business card (4);
- a contact information managing unit (102) configured to, when said request (11) for contact information (10) corresponds to a profile (12):
∘ retrieve contact information (10) from said profile (12); and
∘ generate a share back link (20) configured to collect share back contact information (21) from said second electronic device (2);
- a rendering engine (103) configured to render, within a browser (230) of said second electronic device (2), said contact information (10) and said share back link (20);
- a share back receiver (104) configured to receive share back contact information (21) from said second electronic device (2) when said share back link (20) is executed; and
- a profile creating engine (105) configured to create a new profile (22) comprising said share back contact information (21).

2. A system (3) according to claim 1, wherein said system (3) further comprises a contact saving engine (106) configured to, upon reception of said contact information (10) from said profile (12), save said contact information (10) from said profile (12) into said second electronic device (2).

3. A system (3) according to any of the preceding claims, wherein said contact information managing unit (102) is further configured to generate a push link (30) for said new profile (22) and wherein said rendering engine (103) is further configured to render said push link (30) to said first electronic device (1), thereby enabling said first electronic device (1) to look up said share back contact information (21) from said new profile (22).

4. A system (3) according to claim 3, wherein said contact saving engine (106) is further configured to, upon execution of said push link (30), save said share back contact information (21) from said new profile (22) into said first electronic device (1).

5. A system (3) according to claim 4, wherein said contact saving engine (106) is further configured to save said share back contact information (21) from said new profile (22) into a first format compatible with a customer relationship management system coupled to said first electronic device (1), thereby integrating said share back contact information (21) from said new profile (22) into a customer relationship management system coupled to said first electronic device (1).

6. A system (3) according to claim 3, wherein said share back contact information (21) from said new profile (22) is not saved into said first electronic device (1) when said push link (30) is not executed by said first electronic device (1) or when said first electronic device (1) discards said push link (30).

7. A system (3) according to any of the preceding claims, wherein said browser (230) of said second electronic device (2) is a web browser and wherein said rendering engine (103) is further configured to enable execution of a representation of a web page incorporating said contact information (10) and/or said share back link (20) in said web browser (230) of said second electronic device (2).

8. A system (3) according to any of the preceding claims, wherein said system (3) further comprises a profile database (107) configured to store contact information (10) for profiles (12) and further configured to store said share back contact information (21) for said new profile (22).

9. A system (3) according to any of the preceding claims, wherein said system (3) further comprises a rule generator (108) configured to allow said first electronic device (1) to configure said contact information (10).

10. A system (3) according to any of the preceding claims, wherein said system (3) further comprises a share back configurator (109) configured to allow said first electronic device (1) to configure said share back link (20).

11. A business card (4) associated with a first electronic device (1), where said business card (4) comprises an encoded object (41) and/or a wireless transceiver (42) configured to provide a link associated with a profile (12) comprising contact information (10), wherein said profile (12) is comprised in a system (3); and wherein said encoded object (41) and/or said wireless transceiver (42) are further configured to trigger said system (3) to render, in a browser (230) of a second electronic device (2) and when said second electronic device (2) establishes a wireless connection with said business card (4), said contact information (10) and a share back link (20) configured to collect share back contact information (21) from said second electronic device (2) .

12. Computer implemented method for exchanging with a second electronic device (2) contact information (10) from a business card (4) associated with a first electronic device (1), wherein said method comprises the steps of:
- receiving a request (11) for contact information (10) when a second electronic device (2) establishes a wireless connection with said business card (4);
- determining whether an association between said request (11) for contact information (10) and a profile (12) exists;
- when an association exists, retrieving contact information (10) from said profile (12);
- rendering said contact information (10) within a browser (230) of said second electronic device (2);
- generating a share back link (20) configured to collect share back contact information (21) from said second electronic device (2);
- rendering said share back link (20) within said browser (230) of said second electronic device (2);
- receiving share back contact information (21) from said second electronic device (2) when said share back link (20) is executed; and
- creating a new profile (22) comprising said share back contact information (21).

13. A computer program comprising software code adapted to perform the method according to claim 12.

14. A computer readable storage medium comprising computer-executable instructions which, when executed by a computing system, perform a method according to claim 12.

15. Use of a business card (4) in a system (3) according to any of the claims 1 to 10 comprising the steps of:
- providing a link associated with a profile (12) comprising contact information (10) through an encoded object (41) and/or a wireless transceiver (42), wherein said profile (12) is comprised in a system (3); and
- via said encoded object (41) and/or said wireless transceiver (42), triggering said system (3) to render, in a browser (230) of a second electronic device (2) and when said second electronic device (2) establishes a wireless connection with said business card (4), said contact information (10) and a share back link (20) configured to collect share back contact information (21) from said second electronic device (2).
